# EUROPEAN PATENT SPECIFICATION

(11) **EP 3 453 795 B1**
(45) Date of publication and mention of the grant of the patent: **14.02.2024**
(21) Application number: 17831207.0
(22) Date of filing: 31.05.2017
(51) Int. Cl.: D06F 37/40, D06F 37/06, D06F 37/04, D06F 17/06, D06F 17/08, D06F 23/02, D06F 37/22

(54) **WASHING MACHINE**
WASCHMASCHINE
MACHINE À LAVER

(30) Priority: 18.07.2016 KR 20160091051
(43) Date of publication of application: 13.03.2019
(73) Proprietor: Samsung Electronics Co., Ltd., Suwon-si, Gyeonggi-do 16677 (KR)
(72) Inventor: JEOUNG, Jeoung Kyo, Yongin-si Gyeonggi-do 16953 (KR); YOON, Boo Keun, Yongin-si Gyeonggi-do 17012 (KR); IKEDA, Izumi, Minoo-shi Osaka 562-0036 (JP); KANG, Geun, Hwaseong-si Gyeonggi-do 18447 (KR)
(74) Representative: Rose, Kathryn Clare
(86) International application number: PCT/KR2017/005683
(87) International publication number: WO 2018/016733

(56) References cited:
- EP-A1- 2 455 531
- WO-A1-2009/062920
- WO-A1-2011/067287
- WO-A1-2015/009106
- WO-A1-2015/127823
- WO-A1-2015/158044
- CN-U- 203 420 126
- FR-A- 1 227 699
- JP-A- 2010 046 323
- KR-A- 19990 042 133
- KR-A- 20050 087 343
- KR-A- 20160 075 614
- KR-B1- 100 984 583
- US-A1- 2004 107 739
- US-A1- 2005 132 556
- US-A1- 2011 088 276
- US-A1- 2014 190 219

## Description

### [Technical Field]

The present disclosure relates to a washing machine, and more particularly, to a washing machine capable of independently driving a drum and a pulsator.

### [Background Art]

A washing machine is a machine for washing clothes using electric power, and generally includes a tub for storing washing water and a drum rotatably installed inside the tub. The washing machine includes a drum type washing machine for washing the laundry by raising and lowering the laundry while the rotating tub is rotating, and an electric washing machine for washing the laundry using water flows generated by the pulsator when the rotating tub is rotated.

In the drum type washing machine, the rotating axis of the drum is arranged in a substantially horizontal direction, so that the laundry is lifted and dropped as the drum is rotated, thereby washing the laundry.

The conventional drum type washing machine includes a lifter provided inside the drum for lifting the laundry upward. Unlike the electric washing machine, the conventional drum type washing machine is not provided with a pulsator for generating water flows inside the drum.

WO 2015/158044 A1 and WO 2009/062920 A1 relate to drum-type washing machines comprising a main body having a laundry inlet on a front surface portion thereof and having a drum, a pulsator and a pulley motor, whereby the pulsator is disposed inside the drum on a side of the drum facing opposite the laundry inlet and is configured to be rotated separately from the drum. US 2014/0190219 A1 relates to a drum-type washing machine having a main drum and a sub-drum with lifters and a driving motor. WO 2015/127823 A1, FR 1 227 699 A, and JP 2010-046323 A relate to drum-type washing machines having a drum, a pulsator and a driving motor. WO 2015/009106 A1 relates to a motor for a washing machine. US 2011/088276 A1, CN 203 420 126 U, US 2005/132556 A1, and EP 2 455 531 A1 relate to drum-type washing machines having a drum with through holes formed as protrusions.

### [Disclosure]

### [Technical Problem]

One aspect of the present disclosure discloses a drum type washing machine having no lifter but a pulsator.

Another aspect of the present disclosure discloses a drum type washing machine capable of independently driving a drum and a pulsator by adopting a dual drive motor.

Still another aspect of the present disclosure discloses a drum type washing machine capable of improving washing performance with a pulsator driven independently of a drum.

Yet another aspect of the present disclosure discloses a drum type washing machine capable of reducing washing time with improved washing performance by providing a pulsator driven independently of a drum.

### [Technical Solution]

In accordance with one aspect of the present invention, there is provided a washing machines according to claim 1. Embodiments of the invention are set out in the dependent claims.

The drum and the pulsator may have different rotating directions.

The driving device may include an annular stator, a first rotor rotating inside the stator, and a second rotor rotating outside the stator.

### [Advantageous Effects]

According to an aspect of the present disclosure, a washing machine may independently drive a drum and a pulsator using a dual drive motor, thereby improving washing performance and reducing washing time.

### [Description of Drawings]

FIG. 1 is a lateral cross-sectional view illustrating a schematic configuration of a washing machine according to an embodiment of the present invention;
FIG. 2 is a view illustrating an inside of the washing machine shown in FIG. 1;
FIG. 3 is a view illustrating an inside of a tub, a drum, and a pulsator of a washing machine according to an embodiment of the present invention;
FIG. 4 is an enlarged view of a portion of the washing machine shown in FIG. 1;
FIG. 5 is an enlarged view of a portion of the washing machine shown in FIG. 4;
FIG. 6 is a view illustrating an inside of a tub, a drum, and a pulsator according to another embodiment of the present disclosure that is not covered by the claimed invention; and
FIG. 7 is a view illustrating an inside of a tub, a drum, and a pulsator according to another embodiment of the present disclosure that is not covered by the claimed invention.

### [Modes of the Invention]

The descriptions proposed herein are just preferred examples for the purpose of illustration only so it should be understood that other modifications could be made thereto without departing from the scope of the invention as defined by the claims.

Also, like reference numerals or symbols provided in each of the drawings indicate components or elements performing the same functions.

Also, the terms used herein are merely to describe a specific embodiment, and do not limit the present disclosure. Further, unless the context clearly indicates otherwise, singular expressions should be interpreted to include plural expressions. It should be understood that the terms "comprises," "comprising," "includes" or "has" are intended to indicate the presence of features, numerals, steps, operations, elements and components described in the specification or the presence of combinations of these, and do not preclude the presence of one or more other features, numerals, steps, operations, elements and components, the presence of combinations of these, or additional possibilities.

Also, the terms including ordinal numbers such as "first," "second," etc. can be used to describe various components, but the components are not limited by those terms. The terms are used merely for the purpose of distinguishing one component from another. For example, a first component may be referred to as a second component, and similarly, a second component may be referred to as a first component without departing from the scope of the claims of the disclosure. The term "and/or" encompasses combinations of a plurality of items or any one of the plurality of items.

Meanwhile, the terms "front end", "rear end", "upper portion", "lower portion", "upper end" and "lower end" used in the following description are defined based on the drawing, but a shape and a location of each element are not limited by those terms.

Hereinafter, a front loading type washing machine for inputting laundry through the front of the washing machine will be described, but the present disclosure is not limited thereto and the present disclosure is also applicable to a top loading type washing machine in which laundry is loaded from above the washing machine, however such a top-loading machine configuration does not form part of the claimed invention.

Hereinafter, embodiments according to the present disclosure will be described in detail with reference to the accompanying drawings.

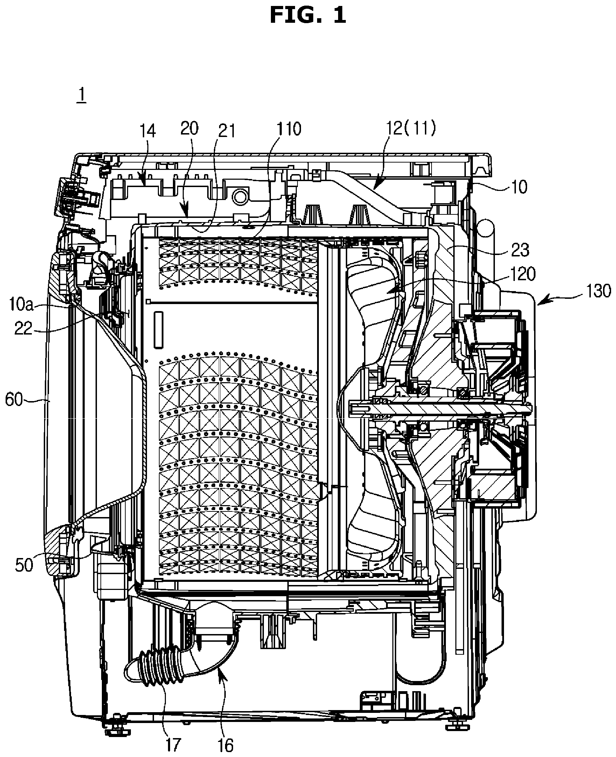

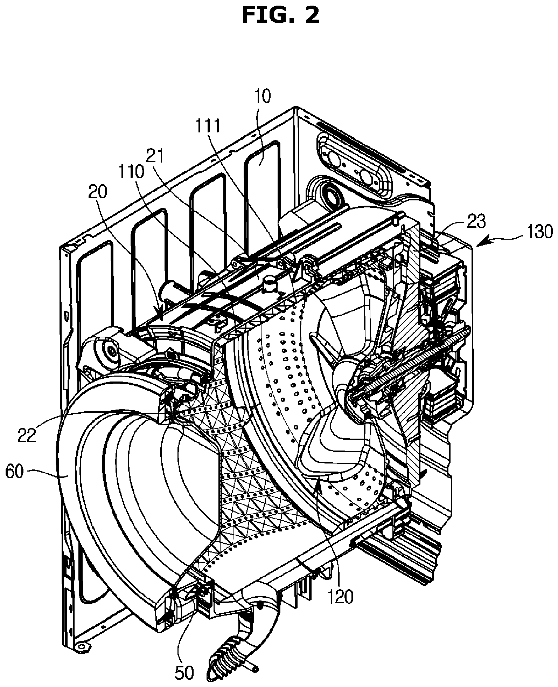

FIG. 1 is a lateral cross-sectional view illustrating a schematic configuration of a washing machine 1 according to an embodiment of the present invention. FIG. 2 is a view illustrating an inside of the washing machine 1 shown in FIG. 1.

Referring to Figure 1, the washing machine 1 includes a main body 10 forming an outer appearance and containing various components, a tub 20 provided inside the main body 10 to store washing water, a drum 110 that receives and rotates laundry, a pulsator 120 rotatably disposed inside the drum 110, and a driving device 130 rotating the drum 110 and the pulsator 120.

The main body 10 may substantially have a box shape. The main body 10 may have a front plate, a rear plate, a top plate, a bottom plate, and side plates. The front plate is provided with a laundry inlet 10a to allow laundry to be thrown into the drum 110.

The laundry inlet 10a of the main body 10 may be opened or closed by a door 60. The door 60 may be rotatably coupled to the main body 10 by a hinge member. The door 60 may be composed of a glass member and a door frame for supporting the glass member.

The glass member may be formed of a transparent tempered glass to be looked through to the inside of the main body 10. The glass member may be provided to protrude toward the inside of the tub 20 so as to prevent the laundry from being biased toward the door 60.

The tub 20 stores the washing water and may be formed in a substantially cylindrical shape. The tub 20 may be supported by a suspension. The tub 20 may include a hollow cylindrical portion 21, an opening 22 formed on one side of the cylindrical portion 21 to correspond to the laundry inlet 10a of the main body 10, and a bottom portion 23 formed on the other side of the cylindrical portion 21.

The laundry inlet 10a of the front plate of the main body 10 and the opening 22 of the tub 20 may be connected by a diaphragm 50. The diaphragm 50 forms a passage for connecting the laundry inlet 10a of the front plate of the main body 10 and the opening 22 of the tub 20, guides the laundry thrown into the laundry inlet 10a into the drum 110, and reduces transmission of vibration generated during rotation of the drum 110 to the main body 10.

The washing machine 1 according to an embodiment of the present disclosure may include a drainage device 16 capable of draining the washing water from the tub 20. The drainage device 16 may include a drain pipe 17 connected to the lower portion of the tub 20 to guide the washing water to the outside of the main body 10 and a drain pump for pumping the washing water of the tub 20.

A water supply device 11 for supplying washing water to the inside of the tub 20 may be provided at an upper portion of the tub 20. The water supply device 11 may include a water supply pipe 12 for supplying washing water from an external water supply source and a water supply valve for opening or closing the water supply pipe 12.

A detergent supply device 14 for supplying detergent to the tub 20 may be provided at an upper portion of the front side of the main body 10. The detergent supply device 14 may be connected to the tub 20 through a connecting pipe. The washing water supplied by the water supply pipe 12 may be supplied to the inside of the tub 20 together with the detergent by the detergent supply device 14.

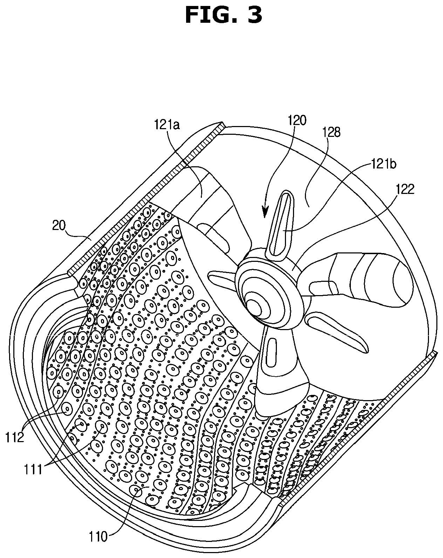

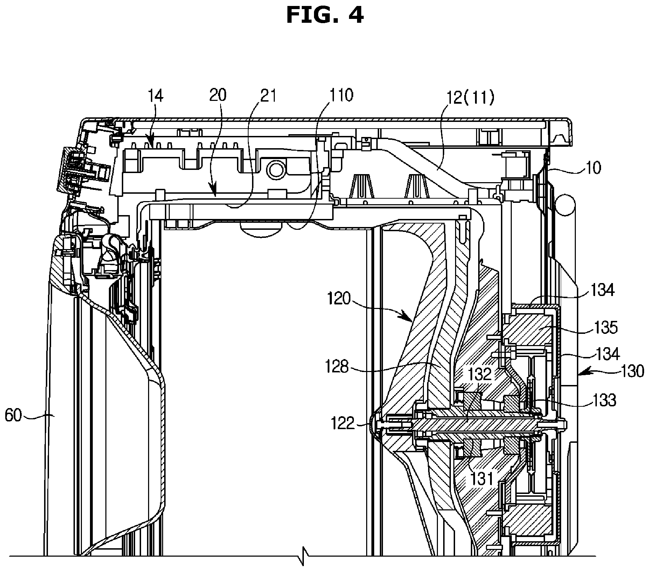

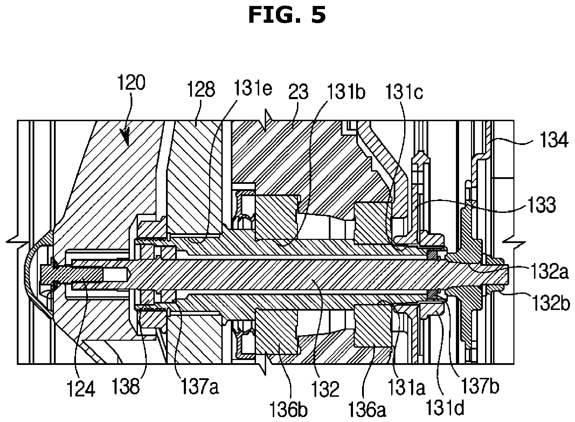

FIG. 3 is a view illustrating an inside of the tub 20, the drum 110, and the pulsator 120 of the washing machine 1 according to an embodiment of the present invention. FIG. 4 is an enlarged view of a portion of the washing machine 1 shown in FIG. 1. FIG. 5 is an enlarged view of a portion of the washing machine 1 shown in FIG. 1. Through holes 111 of the drum 110 are not shown in FIG. 4.

The drum 110 has a substantially cylindrical shape with its front surface opened, and is provided inside the tub 20. The drum 110 may be disposed such that its central axis is parallel to the center axis of the tub 20.

The drum 110 is configured to rotate inside the tub 20. The drum 110 may perform washing by raising and lowering the laundry while rotating. Since the drum 110 in accordance with an embodiment of the present disclosure has no extra structure on its inner surface, it may secure a larger washing space.

Since the drum 110 of the washing machine 1 according to the embodiment of the present invention has no extra structure such as a lifter, it may have difficulty in raising the laundry when rotating at the same speed as the conventional washing machine. Therefore, the washing machine 1 according to the embodiment of the present disclosure may rotate at a speed higher than that of the conventional washing machine. For example, in the conventional washing machine, the drum rotates at 45 revolutions per minute (rpm), while the washing machine 1 according to the embodiment of the present disclosure may rotate the drum 110 at 70 to 80 rpm. That is, in the washing machine 1 according to the embodiment of the present disclosure, the drum 110 may be rotated to such an extent that the laundry is raised by the centrifugal force and then dropped.

There are multiple through holes 111 formed along the circumference of the drum 110 to circulate the washing water stored in the tub 20. The drum 110 of the washing machine 1 has multiple through holes 111 formed continuously along the circumferential face of the drum 110. In the conventional washing machine, the multiple through holes are not formed continuously along the circumferential face of the drum because a lifter is arranged in a portion of the inner circumferential face of the drum to lift the laundry. That is, the through holes are not formed in the portion where the lifter is arranged. On the contrary, the washing machine 1 in accordance with the present invention has the multiple through holes 111 formed along the circumferential face of the drum 110, allowing more washing water to be brought into the drum 110, thereby enhancing washing performance.

In addition, a protrusion 112 forming the through hole 111 is formed to protrude inward from the drum 110. With this structure, the washing water can easily flow into the drum 110, but not easily flow out from the drum 110. Accordingly, the drum 110 of the washing machine 1 of the present invention may be supplied with more washing water than in the conventional washing machine, thereby improving washing performance.

The drum 110 is connected to the driving device 130, which will be described later, on the opposite side to a side facing the laundry inlet 10a.

The pulsator 120 is provided on the opposite side to the side facing the laundry inlet 10a of the drum 110 and is configured to rotate independently of the drum 110. That is, the pulsator 120 can rotate in a direction different from the direction of rotation of the drum 110. The pulsator 120 includes a first blade 121a, a second blade 121b, and a coupling portion 122.

The first blade 121a is larger than the second blade 121b. In the washing machine 1 according to the present invention, since the second blade 121b is provided in a smaller size than the first blade 121a, a wider washing space may be secured.

When viewed from the front where the door 60 is provided in FIG. 1, the washing machine 1 according to the embodiment of the present invention can also agitate the laundry in the front-back directions (hereinafter, such directions are referred to as a front-and-back direction) by the first blade 121a and the second blade 121b to prevent the laundry from sticking to the drum 110 as the drum 110 rotates at high speed as described above. In addition, since the drum 110 and the pulsator 120 are rotated in opposite directions during washing, the laundry may be more effectively agitated, thereby enhancing the washing performance.

The pulsator 120 may be connected to a second driving shaft 132, which will be described later and is configured to rotate by receiving power from the driving device 130. Specifically, the coupling portion 122 of the pulsator 120 may be connected and fixed to the second driving shaft 132 by the coupling portion fixing member 124.

The driving device 130 may be provided behind the tub 20 and is configured to provide power for simultaneously or selectively rotating the drum 110 and the pulsator 120. The driving device 130 may include a first driving shaft 131 connected to the drum 110, the second driving shaft 132 rotatably disposed in the first driving shaft 131 and connected to the pulsator 120, a first rotor 133 connected to the first driving shaft 131, a second rotor 134 connected to the second driving shaft 132, and a stator 135 disposed with a gap between the first rotor 133 and the second rotor 134. The driving device 130 may convert the electric force to a mechanical rotational force. The driving device 130 may be a dual drive motor that may rotate the drum 110 and the pulsator 120, respectively.

The rotational force generated by the driving device 130 may be transmitted to the drum 110 through the first driving shaft 134 and may be transmitted to the pulsator 120 through the second driving shaft 135 provided inside the first driving shaft 134.

The first driving shaft 134 may be press-fitted into the first rotor 133, may rotate together with the first rotor 133, and may pass through the rear wall of the tub 20 to connect the drum 110 and the driving device 130.

A first bearing 136a and a second bearing 136b that rotatably support the first driving shaft 131 may be disposed on the outer circumferential surface of the first driving shaft 131 with a predetermined gap between them. The first bearing 136a and the second bearing 136b may be fixed to the tub 20.

The first driving shaft 131 may have a cylindrical shape so that the second driving shaft 132 may pass through. The first driving shaft 131 may include a first stepped portion 131a with the decreasing outer diameter to have the first bearing 136a mounted thereon without being moved in the vertical direction, and a second stepped portion 131b with the decreasing outer diameter to have the second bearing 136b mounted thereon without being moved in the vertical direction.

The first driving shaft 131 may have a first connecting portion 131c connected to the first rotor 133 at a lower side of a portion where the first bearing 136a is mounted, a first fixing nut 131d for fixing the first rotor 133 to the first driving shaft 131 may be fastened to the lower side of the first connecting portion 131c. The first driving shaft 131 may include a second connecting portion 131e formed on the upper side of a portion where the second bearing 136b is inserted, and connected to a flange member 128 that connects the first driving shaft 131 and the bottom of the drum 110 to transmit the rotational force of the first driving shaft 131 to the drum 110.

The first connecting portion 131c and the second connecting portion 131e may form a screw thread on the outer circumferential surface of the first driving shaft 131 and may be coupled with the first rotor 133 and the flange member 128, respectively, by screwing, but embodiments of the present disclosure are not limited thereto and the first connecting portion 131c and the second connecting portion 131e may have any structure as long as the structure may connect the first rotor 133 and the flange member 128 to the outer surface of the first driving shaft 131.

The second driving shaft 135 may be press-fitted into the second rotor 133 rotated together with the second rotor 133, and rotatably provided in the hollow interior of the first driving shaft 134. The second driving shaft 135 may pass through the rear wall of the tub 20 to connect the pulsator 120 and the driving device 130.

The second driving shaft 132 may have a third connecting portion 132a connected to the second rotor 134 by being drawn out from the lower end of the first driving shaft 131 at a lower portion of the second driving shaft 132, and a second fixing nut 132b may be fastened to the bottom end of the lower portion to prevent detachment of the second rotor 134.

The second driving shaft 132 may have a fourth connecting portion 132c connected to the pulsator 120 by being drawn from the upper end of the first driving shaft 131 at an upper portion of the second driving shaft 132.

The third connecting portion 132a and the fourth connecting portion 132c may form a screw thread on the outer circumferential surface of the second driving shaft 132 and be screwed with the second rotor 133 and the pulsator 120, respectively, but embodiments of the present disclosure are not limited thereto and the third connecting portion 132a and the fourth connecting portion 132c may have any structure as long as the structure may connect the second rotor 134 and the pulsator 120 to the outer surface of the second driving shaft 132.

A first sleeve bearing 137a and a second sleeve bearing 137b are fixed to the upper inner circumferential surface and the lower inner circumferential surface of the first driving shaft 131, respectively, and the second driving shaft 132 may be rotatably supported by the first sleeve bearing 137a and the second sleeve bearing 137b.

In addition, a sealing member 138 may be provided between the upper inner surface of the first driving shaft 131 and the upper outer surface of the second driving shaft 132 to prevent leakage of the washing water.

The first rotor 133 may include a first magnet 133a disposed to face the inner surface of the stator 135 with a predetermined gap. That is, the first magnet 133a is provided on the outer surface of the first rotor 133 and the inner surface of the first rotor 133 may be connected to the first connecting portion 131c of the first driving shaft 131. According to this configuration, the first rotor 133 may rotate inside the stator 135.

The second rotor 134 may include a second magnet 134a disposed to face the outer surface of the stator 135 with a predetermined gap. That is, the second magnet 134a may be provided on the outer surface of the second rotor 134, and the inner surface of the second rotor 134 may be connected to the third connecting portion 132a of the second driving shaft 132. According to this configuration, the second rotor 134 may rotate outside the stator 135.

The stator 135 may include a stator core formed in an annular shape, a bobbin which is a non-magnetic body wrapped around the stator core, a first coil wound on one side of the stator core, and a second coil wound on the other side of the stator core.

According to this configuration, in the washing machine 1 according to an embodiment of the present invention, the first power source may be applied to the first coil and the second power source may be applied to the second coil, and accordingly, only the first rotor 133 may be rotated when power is applied to only the first coil, only the second rotor 134 may be rotated when power is applied to only the second coil, and the first rotor 133 and the second rotor 134 may be simultaneously rotated when power is simultaneously applied to the first coil and the second coil.

Specifically, since the washing machine 1 according to an embodiment of the present invention may form a pair of independent magnetic circuits by forming a first magnetic circuit between one side of the stator 135 in which the first magnet 133a is disposed and the first rotor 133 and a second magnetic circuit between the other side of the stator 135 in which the second magnet 134a is disposed and the second rotor 134, , the washing machine 1 may drive the first rotor 133 and the second rotor 134 separately.

Although, in the above description, the driving device 130 has two coils wound around one stator 135, the present disclosure is not limited to this and the driving device 130 may be configured to independently rotate the drum 110 and the pulsator 120 by controlling a power source applied through the inverter circuit while only one coil is wound around the stator 135.

Hereinafter, operation of the washing machine 1 according to an embodiment of the present invention will be described.

First, the washing machine 1 according to an embodiment of the present invention may apply power to the first coil and the second coil in opposite directions to rotate the drum 110 and the pulsator 120 in opposite directions during washing, causing the first rotor 133 and the second rotor 134 to be rotated in opposite directions to rotate the drum 110 and the pulsator 120 in opposite directions.

On the other hand, since the drum 110 and the pulsator 120 should be rotated at the same time during dehydration and rinsing, the washing machine 1 according to an embodiment of the present disclosure may rotate the first rotor 133 and the second rotor 134 in the same direction by simultaneously applying power to the first coil and the second coil, thereby rotating the drum 110 and the pulsator 120 in the same direction.

With the configuration, the washing machine 1 according to the embodiment of the present invention can agitate the laundry even if the drum 110 does not have a lifter, and rather improve the washing performance by using the pulsator 120 and the dual drive motor. In addition, since the washing machine 1 omits a structure such as a lifter, a washing space may also be secured. Further with the improved washing performance, washing time may be reduced.

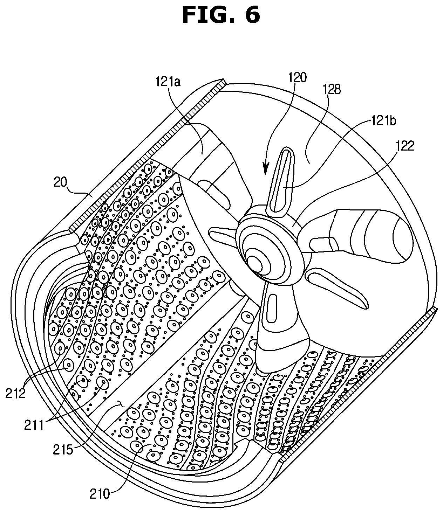

FIG. 6 is a view illustrating an inside of the tub 20, a drum 210, and the pulsator 120 according to another embodiment of the present disclosure that is not covered by the claimed invention.

The drum 210 according to another embodiment will be described with reference to FIG. 6. The same components as those in the embodiment shown in FIGS. 1 to 5 are denoted by the same reference numerals and the description thereof will not be repeated.

Referring to FIG. 6, the drum 210 according to another embodiment of the present disclosure may include a agitating groove 215 extending in the front-rear direction on the inner circumferential surface of the drum 210and sunken toward the tub 20 from the inner circumferential surface of the drum 210. In FIG. 6, the agitating groove 215 extends continuously from the front end to the rear end in the front-rear direction of the drum 210, but the present disclosure is not limited thereto and the agitating groove 215 may be provided at a portion along the longitudinal direction of the drum 210.

Specifically, the through holes 211 formed in some portions of the inner circumferential surface of the drum 210 and the protrusions 212 forming the through holes 211 may be omitted in the drum 210, and the agitating groove 215 may be formed in the portion where the through holes 211 and the protrusions 212 are omitted. The number of the agitating grooves 215 may be three, but the number of the agitating groove 215 is not limited thereto.

Since the drum 210 according to an embodiment of the present disclosure includes the agitating groove 215, the laundry may be more effectively lifted and dropped, and a wider washing space may be secured.

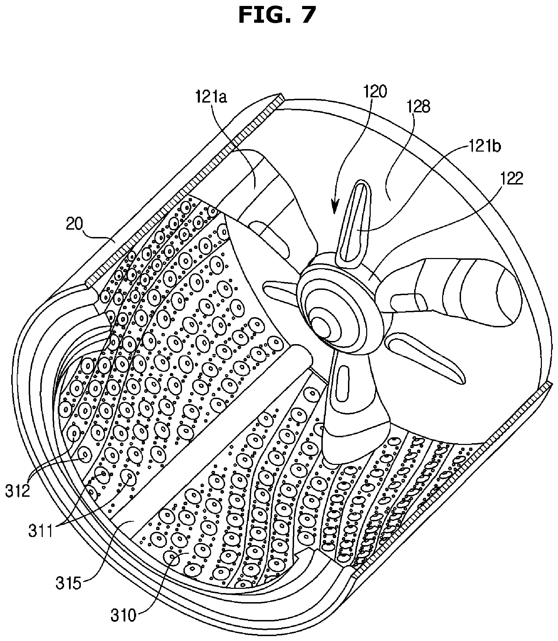

FIG. 7 is a view illustrating an inside of the tub 20, a drum 310, and the pulsator 120 according to another embodiment of the present disclosure that is not covered by the claimed invention.

The drum 310 according to the embodiment will be described with reference to FIG. 7. The same components as those in the embodiment shown in FIGS. 1 to 5 are denoted by the same reference numerals and the description thereof will not be repeated.

Referring to FIG. 7, the drum 310 according to the embodiment of the present disclosure may include an agitating protrusion 315 extending in the front and rear direction on the inner circumferential surface of the drum 310 and swollen toward the rotational axis of the drum 310 from the inner circumferential surface of the drum 310. The agitating protrusion 315 extends continuously from the front end to the rear end in the front-rear direction of the drum 310, as shown in FIG. 7, but the present disclosure is not limited thereto and the agitating protrusion 315 may be provided at a portion along the length direction of the drum 310.

Specifically, the through holes 311 formed in some parts of the inner circumferential surface of the drum 310 and the protrusions 312 forming the through holes 311 may be omitted, and the agitating protrusion 315 may be formed at the portion where the through holes 311 and the protrusions 312 are omitted. There may be three agitating protrusions 315 arranged along the inner circumferential surface of the drum 310 at regular intervals, but the number of the agitating protrusions 315 is not limited thereto.

Since the drum 310 according to the embodiment of the present disclosure includes the agitating protrusion 315, the laundry may be more effectively lifted and dropped.

Although a few embodiments of the present disclosure have been shown and described, it would be appreciated by those skilled in the art that changes may be made in these embodiments without departing from the principles of the invention, the scope of which is defined in the claims.

## Claims

1. A washing machine comprising:
a main body (10) having a laundry inlet (10a) on a front surface portion of the main body (10);
a tub (20) provided inside the main body (10) to store washing water;
a drum (110) rotatably provided in the tub (20) and comprising a plurality of through holes (111) continuously formed along the circumferential surface thereof;
a pulsator (120) disposed inside the drum (110) on a side of the drum (110) facing opposite to the laundry inlet (10a) and configured to be rotated separately from the drum (110); and
a driving device (130) configured to provide power to the drum (110) and the pulsator (120),
wherein no lifters are mounted on an inner surface of the drum (110),
wherein each of the plurality of through holes (111) is formed as a protrusion (112) configured to protrude inward from the inner circumferential surface of the drum (110),
wherein the pulsator (120) comprises:
a coupling portion (122) disposed at the central axis of the pulsator (120);
a first blade (121a); and
a second blade (121b) configured to have a smaller size than the first blade (121a), and
wherein the first blade (121a) and the second blade (121b) are disposed alternately in a circumferential direction of the coupling portion (122) and extend outward from the coupling portion (122) in a radial direction.

2. The washing machine of claim 1, wherein the drum (110) and the pulsator (120) are configured to rotate in different directions.

3. The washing machine of claim 1, wherein the driving device (130) comprises:
an annular stator (135),
a first rotor (133) rotating inside the stator (135), and
a second rotor (134) rotating outside the stator (135).

## Patentansprüche

1. Waschmaschine, umfassend:
einen Hauptkörper (10) mit einer Wäscheeintrittsöffnung (10a) an einem vorderen Frontflächenabschnitt des Hauptkörpers (10);
einen Laugenbehälter (20), der im Inneren des Hauptkörpers (10) bereitgestellt ist, um Waschwasser zu speichern;
eine Trommel (110), die drehbar in dem Laugenbehälter (20) bereitgestellt ist und eine Vielzahl von Durchgangslöchern (111) umfasst, die kontinuierlich entlang der Umfangsfläche davon ausgebildet sind;
einen Pulsator (120), der innerhalb der Trommel (110) auf einer Seite der Trommel (110) angeordnet ist, der der Wäscheeintrittsöffnung (10a) gegenüberliegt, und der konfiguriert ist, um getrennt von der Trommel (110) gedreht zu werden; und
eine Antriebsvorrichtung (130), die konfiguriert ist, um der Trommel (110) und dem Pulsator (120) Energie bereitzustellen,
wobei keine Heber an einer Innenfläche der Trommel (110) montiert sind,
wobei jedes der Vielzahl von Durchgangslöchern (111) als ein Vorsprung (112) ausgebildet ist, der konfiguriert ist, um von der inneren Umfangsfläche der Trommel (110) nach innen vorzuspringen,
wobei der Pulsator (120) umfasst:
einen Kupplungsabschnitt (122), der an der Mittelachse des Pulsators (120) angeordnet ist;
eine erste Schaufel (121a); und
eine zweite Schaufel (121b), die konfiguriert ist, um eine kleinere Größe als die erste Schaufel (121a) aufzuweisen, und
wobei die erste Schaufel (121a) und die zweite Schaufel (121b) abwechselnd in einer Umfangsrichtung des Kupplungsabschnitts (122) angeordnet sind und sich von dem Kupplungsabschnitt (122) in einer radialen Richtung nach außen erstrecken.

2. Waschmaschine nach Anspruch 1, wobei die Trommel (110) und der Pulsator (120) konfiguriert sind, um sich in unterschiedliche Richtungen zu drehen.

3. Waschmaschine nach Anspruch 1, wobei die Antriebsvorrichtung (130) umfasst:
einen ringförmigen Stator (135),
einen ersten Rotor (133), der sich innerhalb des Stators (135) dreht, und
einen zweiten Rotor (134), der sich außerhalb des Stators (135) dreht.

## Revendications

1. Machine à laver comprenant :
un corps principal (10) comportant une entrée de linge (10a) sur une partie de surface avant du corps principal (10) ;
une cuve (20) pourvue à l'intérieur du corps principal (10) destinée à stocker l'eau de lavage ;
un tambour (110) pourvu rotatif dans la cuve (20) et comprenant une pluralité de trous traversants (111) formés de manière continue le long de sa surface circonférentielle ;
un pulsateur (120) disposé à l'intérieur du tambour (110) sur un côté du tambour (110) orienté en regard de l'entrée de linge (10a) et conçu pour tourner indépendamment du tambour (110) ; et
un dispositif d'entraînement (130) conçu pour fournir de l'énergie au tambour (110) et au pulsateur (120),
aucun dispositif de levage n'étant monté sur une surface interne du tambour (110),
chacun de la pluralité de trous traversants (111) étant formé sous la forme d'une saillie (112) conçue pour faire saillie vers l'intérieur de la surface circonférentielle interne du tambour (110),
ledit pulsateur (120) comprenant :
une partie de couplage (122) disposée au niveau de l'axe central du pulsateur (120) ;
une première pale (121a) ; et
une seconde pale (121b) conçue de manière à avoir une taille plus petite que celle de la première pale (121a), et
ladite première pale (121a) et ladite seconde pale (121b) étant disposées de manière alternée dans une direction circonférentielle de la partie de couplage (122) et s'étendant vers l'extérieur de la partie de couplage (122) dans une direction radiale.

2. Machine à laver selon la revendication 1, ledit tambour (110) et ledit pulsateur (120) étant conçus pour tourner dans des directions différentes.

3. Machine à laver selon la revendication 1, ledit dispositif d'entraînement (130) comprenant :
un stator annulaire (135),
un premier rotor (133) tournant à l'intérieur du stator (135), et
un second rotor (134) tournant à l'extérieur du stator (135).
